# EUROPÄISCHE PATENTANMELDUNG

(11) **EP 4 124 763 A1**
(43) Veröffentlichungstag der Anmeldung: **01.02.2023**
(21) Anmeldenummer: 21192062.4
(22) Anmeldetag: 19.08.2021
(51) Int. Cl.: F16B 11/00, F16B 9/00, F16B 47/00

(54) **BEFESTIGERANORDNUNG**

(30) Priorität: 26.07.2021 DE 202021103982 U
(71) Anmelder: Ehni Schaumstofftechnik GmbH, 73266 Bissingen (DE)
(72) Erfinder: Ramsteiner, Willi, 8962 Bergdietikon (CH)
(74) Vertreter: Ruckh, Rainer Gerhard

(57) **Zusammenfassung**

Die Erfindung betrifft eine Befestigeranordnung (1) mit einem Befestiger (2), welcher zur Befestigung an einer Unterlage mittels eines Klebstoffs ausgebildet ist, und mit einem eine Objekthalterung (3) aufweisenden Objekt (4), wobei die Objekthalterung (3) an dem auf der Unterlage befestigten Befestiger (2) fixierbar ist. Der Befestiger (2) weist ein aus einem metallischen Werkstoff bestehenden Armierungsteil (11) auf, dessen Seitenwandelemente (19) zwischen einem Klemmring und Randsegmenten (9b) einer Halterung (9) gelagert sind. Die Seitenwandelemente (19) des Armierungsteils (11) sind zur Fixierung der Objekthalterung (3) ausgebildet. Der Befestiger (2) weist ein Klebstoffreservoir (20) begrenzendes Andrückelement (8) auf, wobei durch eine Verschiebung des Andrückelements (8) in axialer Richtung Klebstoff aus dem Klebstoffreservoir (20) über Öffnungen im Armierungsteil (11) und in der Halterung (9) ausführbar ist, so dass der Klebstoff den Befestiger (2) an der Unterlage fixiert.

## Beschreibung

Die Erfindung betrifft eine Befestigeranordnung.

Eine derartige einen Befestiger aufweisende Befestigeranordnung ist aus der WO 2014/166773 A1 bekannt.

Diese Befestigeranordnung dient zur Ausbildung einer Klebeverbindung zwischen einem Gegenstand und einer Auflage. Der Gegenstand weist ein Reservoir mit einem Klebemittel auf, welches mit einer eine Sollbruchstelle aufweisenden Wand an eine Kontaktfläche angrenzt. Der Gegenstand weist einen Knopf mit einem diesem zugeordneten Durchstoßmittel in Form eines Dorns oder einer Spitze auf, wobei durch Betätigen des Knopfs das Durchstoßmittel einen Durchbruch in der Wand des Reservoirs generiert, durch welchen Klebemittel aus dem Reservoir auf die Kontaktfläche geleitet ist und eine Klebeschicht zur Befestigung des Gegenstands auf der Auflage ausbildet.

Bei dieser Vorrichtung wird das zur Fixierung an der Auflage benötigte Klebemittel im Gegenstand selbst gelagert. Die Freisetzung des Klebemittels erfolgt auf einfache Weise auf Knopfdruck, das heißt durch Betätigen eines am oder im Gegenstand selbst vorgesehenen Knopfs. Auf diesen Knopfdruck strömt das Klebemittel aus dem Reservoir auf die Kontaktfläche und bildet dort eine Klebeschicht, mittels derer der Gegenstand auf der Auflage befestigt werden kann.

Vorteilhaft hierbei ist, dass die Klebeverbindung schnell hergestellt werden kann.

Nachteilig ist, dass die Integration des Durchstoßmittels in Form eines Dorns oder einer Spitze einen unerwünscht hohen Konstruktionsaufwand erfordert, zumal das Durchstoßmittel exakt zur Wand platziert werden muss, um ein reproduzierbares Durchstoßen dieser Wand zu gewährleisten. Dies erfordert eine exakte, toleranzarme Montage und dadurch bedingt hohe Herstellkosten bei der Festigung der Vorrichtung.

Die DE 20 2018 106 227 U1 betrifft einen Befestiger mit einem Träger, welcher eine Befestigungsseite zur Befestigung an einem Gegenstand aufweist. Der Träger ist in axialer Richtung von einer Bohrung durchsetzt. In der Bohrung sind ein Klebstoffreservoir und eine Reservoireinheit für einen hydrophilen Stoff in axialer Richtung der Bohrung gegeneinander verschiebbar gelagert. Das Klebstoffreservoir und der Aufnahmekörper bilden eine koaxiale Anordnung, wobei das Klebstoffreservoir die Reservoireinheit umschließt. In einer Ausgangsstellung der Reservoireinheit relativ zum Träger ist ein aerober Klebstoff in einer geschlossenen Aufnahme des Klebstoffreservoirs gelagert. Der hydrophile Stoff ist in einer geschlossenen Aufnahme in der Reservoireinheit gelagert. Durch eine Verschiebung der Reservoireinheit in eine Betätigungsstellung sind die Aufnahmen mittels Durchstoßmitteln aufgebrochen und der aerobe Klebstoff durch eine Kanalstruktur zwischen dem Klebstoffreservoir und der Reservoireinheit und der hydrophile Stoff durch Austrittsöffnungen in der Reservoireinheit der Befestigungsseite so zugeführt, dass eine selbsttätige Mischung des aeroben Klebstoffs und des hydrophilen Stoffs erfolgt.

Nachteilig bei diesem Befestiger ist, dass das Klebstoffreservoir einerseits und die Reservoireinheit für den hydrophilen Stoff andererseits einen relativ großen konstruktiven Aufwand bedingen, zumal diese gegeneinander verschiebbar sein müssen. Auch für die Durchmischung des Klebstoffs mit dem hydrophilen Stoff ist ein nicht unerheblicher konstruktiver Aufwand erforderlich.

Der Erfindung liegt die Aufgabe zugrunde, eine Befestigeranordnung der eingangs genannten Art auszubilden, welche einen einfachen Aufbau und zugleich eine hohe Funktionalität und Funktionssicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Befestigeranordnung mit einem Befestiger, welcher zur Befestigung an einer Unterlage mittels eines Klebstoffs ausgebildet ist, und mit einem eine Objekthalterung aufweisenden Objekt, wobei die Objekthalterung an dem auf der Unterlage befestigten Befestiger fixierbar ist. Der Befestiger weist ein aus einem metallischen Werkstoff bestehenden Armierungsteil auf, dessen Seitenwandelemente zwischen einem Klemmring und Randsegmenten einer Halterung gelagert sind. Die Seitenwandelemente des Armierungsteils sind zur Fixierung der Objekthalterung ausgebildet. Der Befestiger weist ein Klebstoffreservoir begrenzendes Andrückelement auf, wobei durch eine Verschiebung des Andrückelements in axialer Richtung Klebstoff aus dem Klebstoffreservoir über Öffnungen im Armierungsteil und in der Halterung ausführbar ist, so dass der Klebstoff den Befestiger an der Unterlage fixiert.

Die erfindungsgemäße Befestigeranordnung dient generell zur Befestigung eines Objekts mittels eines Befestigers an einer Unterlage, wobei die Unterlage insbesondere von einer Wand eines Gebäudes gebildet sein kann.

Bei den zu befestigenden Objekten kann es sich beispielsweise um Accessoires für Badezimmer handeln.

Eine wesentliche Anforderung an derartige Befestigeranordnungen besteht darin, dass Objekte mit dem Befestiger langzeitstabil an der Unterlage befestigt werden, wobei eine wesentliche Anforderung an den Befestiger darin besteht, dass dieser auch große Kräfte, und zwar nicht nur Druckkräfte sondern auch Scherkräfte aufnehmen kann, ohne dass sich der Befestiger von der Unterlage löst.

Diese Anforderung wird mit der erfindungsgemäßen Befestigeranordnung erfüllt. Ein wesentlicher Aspekt der Erfindung besteht dabei darin, dass der Befestiger ein aus einem metallischen Werkstoff, insbesondere aus Stahl bestehendes Armierungsteil aufweist.

Dieses Armierungsteil sorgt einerseits für eine Stabilisierung des Befestigers selbst und andererseits für eine stabile Ankopplung an die Objekthalterung.

Die weiteren Komponenten des Befestigers, insbesondere die Halterung, der Klemmring und das Andrückelement können aus Kunststoff bestehen.

Bei dem erfindungsgemäßen Befestiger ist das Armierungsteil zwischen einer Halterung und einem Klemmring gelagert.

Dabei weist die Halterung einen kreisscheibenförmigen Grundkörper mit Öffnungen auf, dessen Außenseite eine Auflagefläche zur Auflage auf der Unterlage ausbildet.

Zur Befestigung an der Unterlage wird der Befestiger betätigt, so dass Klebstoff über Öffnungen in dem Armierungsteil und in Öffnungen in der Halterung ausgeführt wird und eine Klebeschicht bildet, mit der der Befestiger an der Unterlage fixiert wird.

Dabei liegen Öffnungen der Halterung begrenzende Stege und Öffnungen des Armierungsteils begrenzende Stege innerhalb der Klebeschicht und bilden für diese eine Armierung.

Dies sorgt für eine weitere Stabilisierung des Befestigers an der Unterlage.

Vorteilhaft kann der Befestiger an der Unterlage vorfixiert werden, bevor er mittels der Klebeschicht fest bleibend fixiert wird. Vorteilhaft ist hierzu am Rand der Außenseite der Halterung ein Klebestreifen vorgesehen.

Gemäß einer vorteilhaften Ausgestaltung weist das Armierungsteil einen auf der Rückseite der Halterung aufliegenden Flächenkörper mit Öffnungen auf, wobei an gegenüberliegenden Rändern des Flächenkörpers Seitenwandelemente ausmünden, deren Randbereiche Kontaktflächen zur Anlage an die Objekthalterung bilden.

Daran angepasst weist die Halterung zwei vom Grundkörper hervorstehende, gegenüberliegende Randsegmente auf, wobei in Lücken zwischen den Randsegmenten die Seitenwandelemente des Armierungsteils gelagert sind.

Wesentlich dabei ist, dass die die Kontaktflächen bildenden Randbereiche der Seitenwandelemente nach außen über die Randsegmente der Halterung hervorstehen.

Durch diese Anpassung der Halterung an das Armierungsteil wird auf konstruktiv einfache Weise eine Doppelfunktion des Armierungsteils derart erzielt, dass dieses eine Stabilisierung des Befestigers selbst bewirkt und zudem eine stabile Ankopplung an die Objekthalterung gewährleistet.

Die Ankopplung des Armierungsteils an die Objekthalterung wird dadurch komplettiert, dass die Außenseiten der Seitenwandelemente des Armierungsteils Schrägflächen ausbilden, wobei zur Fixierung der Objekthalterung am Befestiger ein in der Objekthalterung gelagerter Gewindestift gegen eine der Schrägflächen geführt ist.

Die Fixierung mittels des gegen die Schrägfläche geführten Gewindestifts stellt, insbesondere gegenüber Schraubverbindungen, eine konstruktiv einfache Lösung dar, die dennoch eine sichere, auch gegenüber Toleranzen der einzelnen Bauteile, sichere Befestigungsmöglichkeiten darstellt.

Vorteilhaft weist die Objekthalterung die Form eines Hohlzylinders auf, der an einer Stirnseite offen ist, wobei der Befestiger über die offene Stirnseite in die Objekthalterung einführbar ist.

Dabei liegen die Kontaktflächen des Armierungsteils an der Innenseite der Seitenwand der hohlzylindrischen Objekthalterung an.

Die Objekthalterung weist somit eine an die Außenkontur des Befestigers angepasste Form auf. Das Objekt ist an der geschlossenen Stirnseite der hohlzylindrischen Objekthalterung befestigt, insbesondere mittels einer Schraubverbindung.

Bei dem erfindungsgemäßen Befestiger ist vorteilhaft, dass der Klemmring verdrehsicher an den Randsegmenten der Halterung gelagert ist.

Zweckmäßig münden an den Innenseiten der Randsegmente Vorsprünge aus, die in Ausnehmungen des Klemmrings greifen.

Mit dieser verdrehsicheren Lagerung ist das Armierungsteil sicher zwischen dem Klemmring und der Halterung aufgenommen.

Der Klemmring erfüllt eine weitere Funktion derart, dass dieser eine Führung für das Andrückelement bildet, das zum Betätigen des Befestigers dient.

Dabei ist vorteilhaft, dass das Andrückelement in einer Sperrstellung am Klemmring lagefixiert ist und an das Klebstoffreservoir angrenzt.

Zweckmäßig wird diese Lagefixierung dadurch realisiert, dass an der Innenwand des Klemmrings Aussparungen vorgesehen sind, wobei in der Sperrstellung des Andrückelements an dessen äußeren Mantelfläche hervorstehende Rastlippen in die Aussparungen des Klemmrings greifen.

In der Sperrstellung des Andrückelements ist der Befestiger nicht betätigt und der Klebstoff ist im Klebstoffreservoir gelagert. In der Sperrstellung des Andrückelements kann der Befestiger als Verkaufseinheit in einer vakuumversiegelten Verpackung, die ein Aushärten des Klebstoffs verhindert, gelagert und transportiert werden.

In der Sperrstellung ist das Andrückelement gegen eine axiale Bewegung gesichert, so dass der Befestiger nicht betätigt werden kann.

Um den Befestiger betätigen zu können, wird das Andrückelement aus der Sperrstellung in eine Betätigungsstellung gedreht, wobei die Drehung um eine mit der Symmetrieachse des Befestigers zusammenfallenden Drehachse erfolgt.

Diese Drehung kann von einer Bedienperson ohne Einsatz von Werkzeugen durchgeführt werden. Die Aussparungen im Klemmring und die zugeordneten Rastlippen des Andrückelements sind so dimensioniert, dass sich bei Drehen des Andrückelements die Rastlippen aus den Ausnehmungen unter elastischer Verformung der aus Kunststoff bestehenden Bauteile lösen.

Dabei wird vorteilhaft ausgenutzt, dass das Andrückelement in der Sperrstellung über den der Halterung abgewandten Rand des Klemmrings hervorsteht.

Die Bedienperson kann somit das Andrückelement am über dem Klemmring hervorstehenden Segment aufgreifen und aus der Sperrstellung in die Betätigungsstellung drehen.

Nachdem das Andrückelement in die Betätigungsstellung gedreht wurde, kann die Bedienperson den Befestiger dadurch betätigen, dass sie das Andrückelement in Richtung des Grundkörpers der Halterung drückt, und zwar so lange bis das Andrückelement bündig mit dem Klemmring abschließt und eine durchgehende ebene Fläche bildet, auf die der Boden der Objekthalterung aufgesetzt werden kann. Der Klebstoff fließt dann aus dem Klebstoffreservoir und bildet eine an die Unterlage angrenzende Klebeschicht, die nach Aushärten für eine stabile Befestigung des Befestigers an der Unterlage sorgt.

Nachdem der Befestiger an der Unterlage befestigt ist, kann die Objekthalterung mit dem daran befestigten Objekt am Befestiger montiert werden.

Die Erfindung wird im Folgenden anhand der Zeichnungen erläutert. Es zeigen:
- Figur 1:: Perspektive Darstellung eines Ausführungsbeispiels der erfindungsgemäßen Befestigeranordnung.
- Figur 2:: Schnittdarstellung der Befestigeranordnung gemäß Figur 1.
- Figur 3:: Schnittdarstellung der Befestigeranordnung gemäß Figur 1 im zusammengebauten Zustand.
- Figur 4:: An einer Wand befestigter Befestiger der Befestigeranordnung gemäß den Figuren 1 bis 3.
- Figur 5:: Einzeldarstellung eines Andrückelements gemäß den Figuren 1 bis 3.
- Figur 6:: Einzeldarstellung einer Halterung gemäß den Figuren 1 bis 3.
- Figur 7:: Einzeldarstellung eines Klemmrings gemäß den Figuren 1 bis 3.
- Figur 8:: Einzeldarstellung eines Armierungsteils gemäß den Figuren 1 bis 3.
- Figur 9:: Vormontierte Einheit bestehend aus der Halterung, dem Klemmring und dem Armierungsteil gemäß den Figuren 6 bis 8.

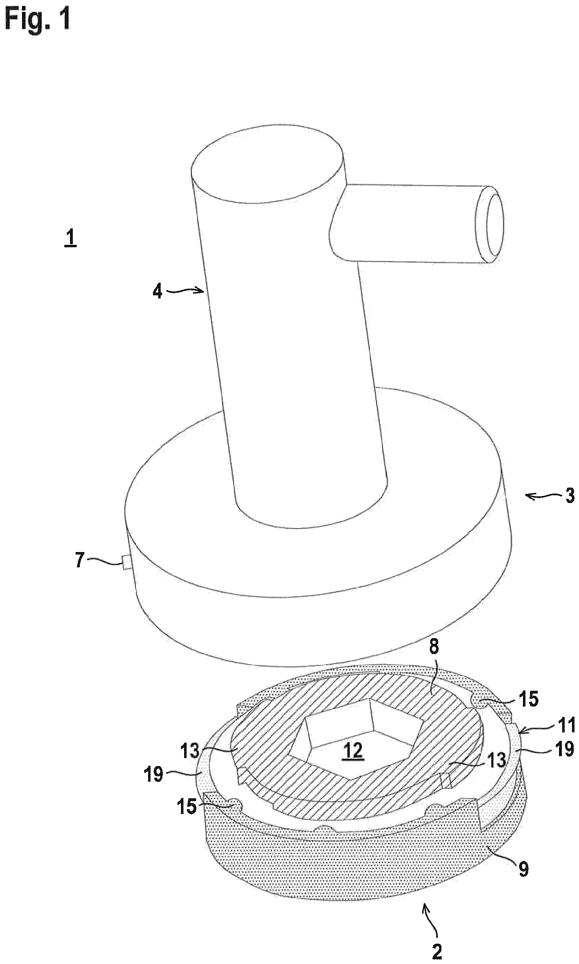

Die Figuren 1 bis 3 zeigen ein Ausführungsbeispiel der erfindungsgemäßen Befestigeranordnung 1. Die Befestigeranordnung 1 besteht aus einem Befestiger 2 sowie eine Objekthalterung 3, an der ein Objekt 4, im vorliegenden Fall ein Handtuchhalter, gelagert ist.

In den Figuren 1 bis 3 ist die Objekthalterung 3 oberhalb des Befestigers 2 dargestellt. Bezugnehmend auf diese Anordnung werden im Folgenden die Begriffe "oben" und "unten" verwendet.

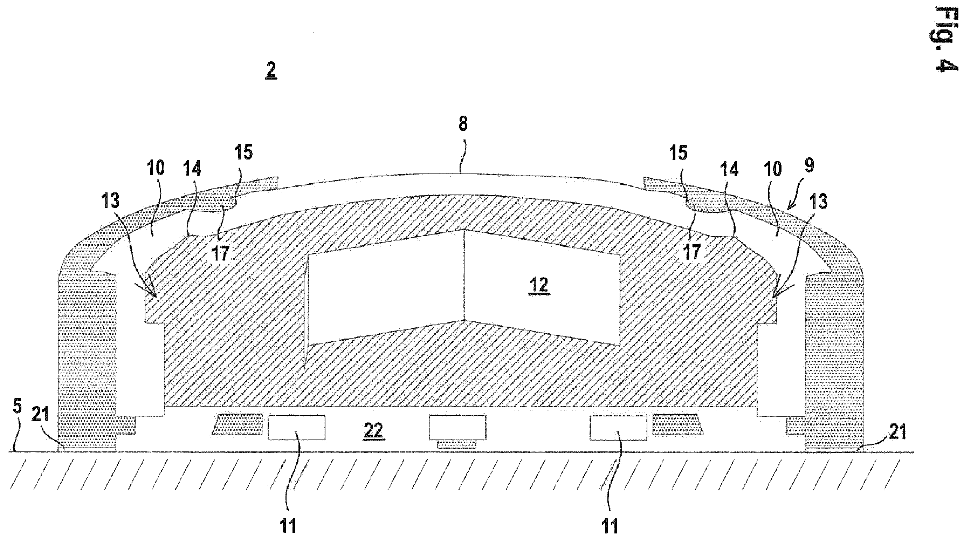

Der Befestiger 2 kann generell an einer Unterlage fixiert werden. Figur 4 zeigt den Befestiger 2 fixiert an einer Unterlage, die von einer Wand 5, insbesondere eines Badezimmers gebildet ist, wobei die Wand 5 natürlich, entgegen der Darstellung in Figur 4, in einer verfikaten Ebene verläuft.

Die Objekthalterung 3 besteht aus einem flachen hohlzylindrischen Körper, der an seiner Unterseite offen ist. An der geschlossenen Oberseite der Objekthalterung 3 ist das Objekt, das heißt der Handtuchhalter mittels einer Schraube 6 befestigt.

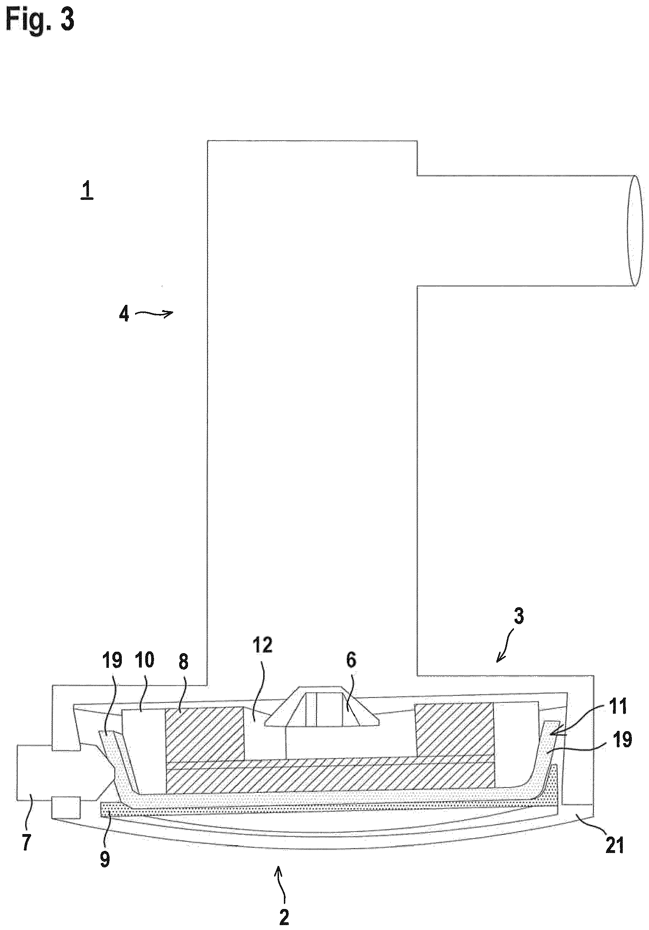

Wie Figur 3 zeigt, kann die Objekthalterung 3 auf den Befestiger 2 aufgesetzt werden. Zur Fixierung am Befestiger 2 ist an einer Seitenwand der Objekthalterung 3 ein Gewindestift 7 gelagert.

Der Befestiger 2 weist eine im Wesentlichen zylindrische Außenkontur auf und ist wie die Objekthalterung 3 drehsymmetrisch zu einer in axialer Richtung der Objekthalterung 3 beziehungsweise des Befestigers 2 verlaufenden Drehachse ausgebildet.

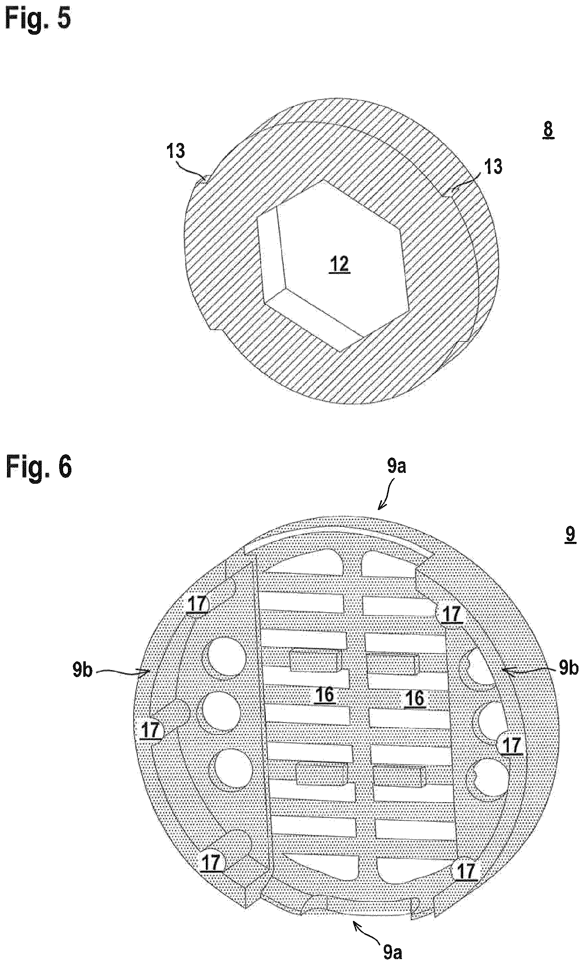

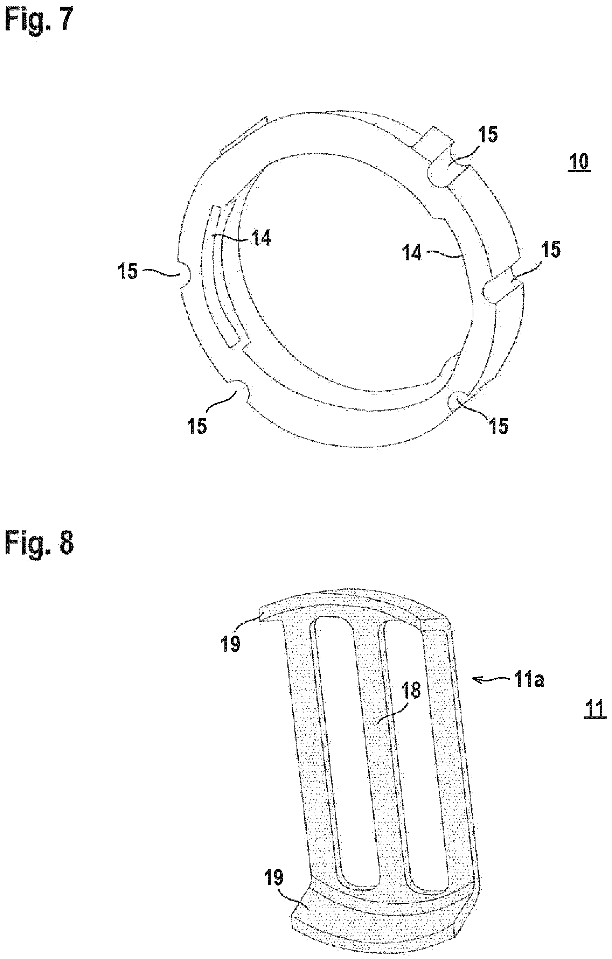

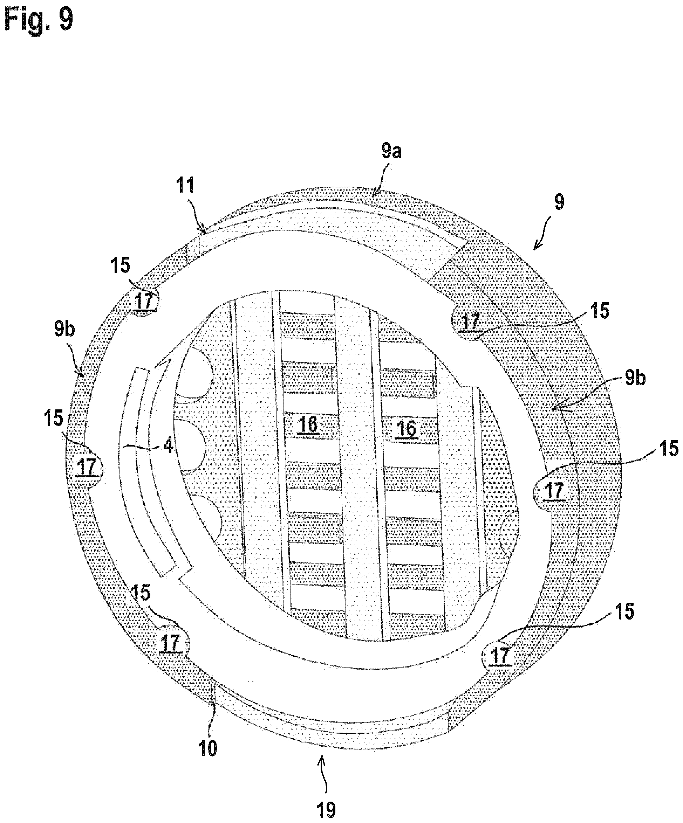

Der Befestiger 2 weist als einzelne Bauteile ein Andrückelement 8 (einzeln dargestellt in Figur 5), eine Halterung 9 (einzeln dargestellt in Figur 6), einen Klemmring 10 (einzeln dargestellt in Figur 7) und ein Armierungsteil 11 (einzeln dargestellt in Figur 8) auf. Figur 9 zeigt den Klemmring 10, das Armierungsteil 11 und die Halterung 9 als vormontierte Einheit.

Das Armierungsteil 11 besteht aus Stahl. Das Andrückelement 8, der Klemmring 10 und die Halterung 9 bestehen aus Kunststoff.

Wie Figur 5 zeigt, ist das Andrückelement 8 in Form eines flachen kreiszylindrischen Massivkörpers ausgebildet. An der Oberseite des Andrückelements 8 befindet sich eine Vertiefung 12, in die die Schraube 6 der Objekthalterung 3 ragt, wenn die Befestigeranordnung 1 zusammengebaut ist.

An gegenüberliegenden Bereichen des oberen Randes des Andrückelements 8 münden Rastlippen 13 aus. Die beiden Rastlippen 13 sind identisch ausgebildet und stehen über die Mantelfläche des Andrückelements 8 nach außen hervor.

Der kreisförmige Klemmring 10 weist an dem oberen Rand seiner Innenseite zwei gegenüberliegende Aussparungen 14 auf, die an die Form und Größe der Rastlippen 13 angepasst sind, so dass bei in dem Klemmring 10 eingeführten Andrückelement 8 die Rastlippen 13 in den Aussparungen 14 gelagert werden können (Figur 7).

Der Klemmring 10 weist an seiner äußeren Mantelfläche Ausnehmungen 15 auf.

Die Halterung 9 weist einen kreisscheibenförmigen Grundkörper 9a auf, der eine Struktur von Öffnungen aufweist, die durch Stege 16 begrenzt sind (Figur 6).

Vom Grundkörper 9a der Halterung 9 stehen zwei gegenüberliegend angeordnete, identisch ausgebildete Randsegmente 9b hervor. Von den Innenseiten der Randsegmente 9b stehen Vorsprünge 17 hervor, die an die Konturen der Ausnehmungen 15 des Klemmrings 10 angepasst sind.

Das aus Stahl bestehende Armierungsteil 11 weist einen Flächenkörper 11a mit einer Struktur von Öffnungen, die durch Stege 18 begrenzt sind, auf (Figur 8). An gegenüberliegenden Rändern des Flächenkörpers 11a münden Seitenwandelemente 19 aus, deren Außenseiten geneigt zum Flächenkörper 11a verlaufende Schrägflächen ausbilden.

Figur 8 zeigt eine vormontierte Einheit des Befestigers 2, bei welcher der Klemmring 10 an der Halterung 9 fixiert ist und dabei das Armierungsteil 11 zwischen Klemmring 10 und Halterung 9 gelagert ist.

Der Flächenkörper 11a des Armierungsteils 11 liegt dabei auf dem Grundkörper 9a der Halterung 9 auf, wobei die Stege 16 der Halterung 9 und die Stege 18 des Flächenkörpers 11a eine gekreuzte Anordnung bilden, so dass zwischen diesen Öffnungen verbleiben.

Die Seitenwandelemente 19 des Armierungsteils 11 sind in Lücken zwischen den Randsegmenten 9b der Halterungen 9 spielarm gelagert und zwar so, dass deren Randbereiche nach außen über die Halterung 9 hervorstehen. Diese hervorstehenden Randbereiche des Armierungsteils 11 bilden Kontaktflächen aus, die an der Innenseite der Objekthalterung 3 anliegen, wenn diese auf dem Befestiger 2 aufgebracht ist.

Der Klemmring 10 ist mit seinen Aussparungen 14 an den Vorsprüngen 17, die an den Innenseiten der Randsegmente 9b der Halterung 9 vorgesehen sind, eingerastet, wodurch der Klemmring 10 an der Halterung 9 verdrehsicher fixiert ist und das Armierungsteil 11 lagefixiert ist.

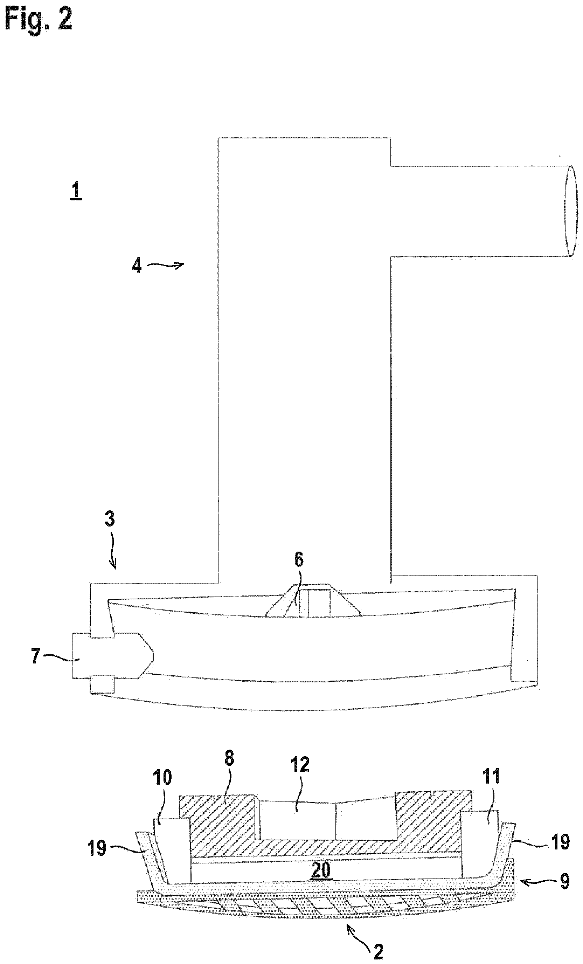

In diese vormontierte Einheit wird Klebstoff eingefüllt und das Andrückelement 8 wird in einer Sperrstellung am Klemmring 10 fixiert, so dass unterhalb des Klemmrings 10 ein Klebstoffreservoir 20 entsteht (Figur 2). Der Klebstoff ist im vorliegenden Fall von einem an der Luft aushärtenden Industrieklebstoff gebildet.

In der Sperrstellung liegen die Rastlippen 13 des Andrückelements 8 in den Aussparungen 14 des Klemmrings 10, so dass das Andrückelement 8 lagegesichert ist und insbesondere nicht nach unten gegen das Klebstoffreservoir 20 gedrückt werden kann. In dieser Sperrstellung steht das Andrückelement 8 über den Klemmring 10 nach oben hervor (Figuren 1 und 2). Der Befestiger 2 ist damit fertig montiert.

In der Sperrstellung ist das Klebstoffreservoir 20 sicher gelagert. Der Befestiger 2 kann so in einer vakuumsicheren Verpackung gelagert werden. Die Unterseite der Halterung 9 ist dabei vorteilhaft mit einer Klebefolie oder dergleichen verschlossen.

Um den Befestiger 2 an der Unterlage, im vorliegenden Fall an der Wand 5 zu befestigen, wird der Befestiger 2 zunächst an die Wand 5 gedrückt und ist dort mit einem am äußeren Rand an der Unterseite der Halterung 9 vorgesehenen Klebestreifen 21 vorfixiert.

Dann dreht eine Bedienperson das Andrückelement 8 aus der Sperrstellung in eine Betätigungsstellung. Hierzu greift die Bedienperson den über den Klemmring 10 hervorstehenden Teil des Andrückelements 8 und dreht den Klemmring 10 um die Drehachse vorzugsweise um 90°. Dabei lösen sich die Rastlippen 13 des Andrückelements 8 aus den Aussparungen 14 des Klemmrings 10.

In der Betätigungsstellung kann dann das Andrückelement 8 von der Bedienperson nach unten gegen die Halterung 9 gedrückt werden, bis die Oberseite des Andrückelements 8 bündig mit der Oberseite des Klemmrings 10 abschließt (Figuren 3 und 4). Dadurch wird der Klebstoff aus dem Klebstoffreservoir 20 nach unten gedrückt und durch die Öffnungen des Armierungsteils 11 und der Halterung 9 gedrückt und bildet eine Klebeschicht 22 auf der Wand 5 (Figur 4). Nach Aushärten der Klebeschicht ist der Befestiger 2 an der Wand 5 fixiert. Die in der Klebeschicht 22 liegenden Stege 16, 18 des Armierungsteils 11 und der Halterung 9 bilden eine Armierung, die die Klebeschicht 22 stabilisiert.

Auf den so an der Wand 5 fixierten Befestiger 2 wird die Objekthalterung 3 aufgesetzt und mittels des Gewindestifts 7 fixiert, in den der Gewindestift 7 gegen die Schrägfläche eines Seitenwandelements 19 des Armierungsteils 11 drückt (Figur 3). Zudem liegen die Kontaktflächen der Seitenwandelemente 19 an der Innenseite der Objekthalterung 3 an.

### B ezugszei chenli ste

- (1): Befestigeranordnung
- (2): Befestiger
- (3): Obj ekthalterung
- (4): Objekt
- (5): Wand
- (6): Schraube
- (7): Gewindestift
- (8): Andrückelement
- (9): Halterung
- (9a): Grundkörper
- (9b): Randsegment
- (10): Klemmring
- (11): Armierungsteil
- (11a): Flächenkörper
- (12): Vertiefung
- (13): Rastlippen
- (14): Aussparung
- (15): Ausnehmung
- (16): Steg
- (17): Vorsprung
- (18): Steg
- (19): Seitenwandelement
- (20): Klebstoffreservoir
- (21): Klebestreifen
- (22): Klebeschicht

## Patentansprüche

1. Befestigeranordnung (1) mit einem Befestiger (2), welcher zur Befestigung an einer Unterlage mittels eines Klebstoffs ausgebildet ist und mit einem eine Objekthalterung (3) aufweisenden Objekt (4), wobei die Objekthalterung (3) an dem auf der Unterlage befestigten Befestiger (2) fixierbar ist, **dadurch gekennzeichnet, dass** der Befestiger (2) ein aus einem metallischen Werkstoff bestehenden Armierungsteil (11) aufweist, dessen Seitenwandelemente (19) zwischen einem Klemmring und Randsegmenten (9b) einer Halterung (9) gelagert sind, wobei die Seitenwandelemente (19) des Armierungsteils (11) zur Fixierung der Objekthalterung (3) ausgebildet sind, und dass der Befestiger (2) ein Klebstoffreservoir (20) begrenzendes Andrückelement (8) aufweist, wobei durch eine Verschiebung des Andrückelements (8) in axialer Richtung Klebstoff aus dem Klebstoffreservoir (20) über Öffnungen im Armierungsteil (11) und in der Halterung (9) ausführbar ist, so dass der Klebstoff den Befestiger (2) an der Unterlage fixiert.

2. Befestigeranordnung (1) nach Anspruch 1, **dadurch gekennzeichnet, dass** das Armierungsteil (11) aus Stahl besteht, und/oder dass der Klemmring (10), die Halterung (9) und das Andrückelement (8) aus Kunststoff bestehen.

3. Befestigeranordnung (1) nach einem der Ansprüche 1 oder 2, **dadurch gekennzeichnet, dass** die Halterung (9) einen Öffnungen aufweisenden kreisscheibenförmigen Grundkörper (9a) mit Öffnungen aufweist, dessen Außenseite eine Auflagefläche zur Auflage auf der Unterlage ausbildet.

4. Befestigeranordnung (1) nach Anspruch 3, **dadurch gekennzeichnet, dass** das Armierungsteil (11) einen auf der Rückseite der Halterung (9) aufliegenden Flächenkörper (11a) mit Öffnungen aufweist, wobei an gegenüberliegenden Rändern des Flächenkörpers (11a) die Seitenwandelemente (19) ausmünden, deren Randbereiche Kontaktflächen zur Anlage an die Objekthalterung (3) bilden.

5. Befestigeranordnung (1) nach einem der Ansprüche 3 und 4, **dadurch gekennzeichnet, dass** die Halterung (9) von zwei vom Grundkörper (9a) hervorstehende, gegenüberliegende Randsegmente (9b) aufweist, wobei in Lücken zwischen den Randsegmenten (9b) die Seitenwandelemente (19) des Armierungsteils (11) gelagert sind, wobei die die Kontaktflächen bildenden Randbereiche der Seitenwandelemente (19) nach außen über die Randsegmente (9b) der Halterung (9) hervorstehen.

6. Befestigeranordnung (1) nach einem der Ansprüche 4 oder 5, **dadurch gekennzeichnet, dass** die Außenseiten der Seitenwandelemente (19) des Armierungsteils (11) Schrägflächen ausbilden, wobei zur Fixierung der Objekthalterung (3) am Befestiger (2) ein in der Objekthalterung (3) gelagerter Gewindestift (7) gegen eine der Schrägflächen geführt ist.

7. Befestigeranordnung (1) nach einem der Ansprüche 1 bis 6, **dadurch gekennzeichnet, dass** die Objekthalterung (3) die Form eines Hohlzylinders aufweist, der an einer Stirnseite offen ist, wobei der Befestiger (2) über die offene Stirnseite in die Objekthalterung (3) einführbar ist.

8. Befestigeranordnung (1) nach Anspruch 7, **dadurch gekennzeichnet, dass** die Kontaktflächen des Armierungsteils (11) an der Innenseite der Seitenwand der hohlzylindrischen Objekthalterung (3) anliegen.

9. Befestigeranordnung (1) nach einem der Ansprüche 5 bis 8, **dadurch gekennzeichnet, dass** der Klemmring (10) verdrehsicher an den Randsegmenten (9b) der Halterung (9) gelagert ist, wobei insbesondere an den Innenseiten der Randsegmente (9b) Vorsprünge (17) ausmünden, die in Ausnehmungen (15) des Klemmrings (10) greifen.

10. Befestigeranordnung (1) nach einem der Ansprüche 1 bis 9, **dadurch gekennzeichnet, dass** das Andrückelement (8) in einer Sperrstellung am Klemmring (10) lagefixiert ist und an das Klebstoffreservoir (20) angrenzt.

11. Befestigeranordnung (1) nach Anspruch 10, **dadurch gekennzeichnet, dass** an der Innenwand des Klemmrings (10) Aussparungen (14) vorgesehen sind, wobei in der Sperrstellung des Andrückelements (8) an dessen äußeren Mantelfläche hervorstehende Rastlippen (13) in die Aussparungen (14) des Klemmrings (10) greifen.

12. Befestigeranordnung (1) nach einem der Ansprüche 10 oder 11, **dadurch gekennzeichnet, dass** das Andrückelement (8) in der Sperrstellung über den der Halterung (9) abgewandten Rand des Klemmrings (10) hervorsteht, und dass das Andrückelement (8) aus der Sperrstellung in eine Betätigungsstellung drehbar ist, wobei in der Betätigungsstellung das Andrückelement (8) gegen die Halterung (9) drückbar ist, so dass der Klebstoff über die Öffnungen der Halterung (9) ausgeführt ist und eine Klebeschicht (22) bildet, die den Befestiger (2) an der Unterlage fixiert.

13. Befestigeranordnung (1) nach Anspruch 12, **dadurch gekennzeichnet, dass** das Andrückelement (8) in Richtung des Grundkörpers (9a) der Halterung (9) drückbar ist, bis die der Halterung (9) abgewandte Stirnseite des Andrückelements (8) bündig mit dem Rand des Klemmrings (10) abschließt.

14. Befestigeranordnung (1) nach Anspruch 12 oder 13, **dadurch gekennzeichnet, dass** Öffnungen der Halterung (9) begrenzende Stege (16) und Öffnungen des Armierungsteils (11) begrenzende Stege (18) innerhalb der Klebeschicht (22) liegen und für diese eine Armierung bilden.

15. Befestigeranordnung (1) nach einem der Ansprüche 3 bis 14, **dadurch gekennzeichnet, dass** am Rand der Außenseite der Halterung (9) ein Klebestreifen (21) vorgesehen ist.

16. Befestigeranordnung (1) nach einem der Ansprüche 10 bis 15, **dadurch gekennzeichnet, dass** der Befestiger (2) mit dem in der Sperrstellung gelagerten Andrückelement (8) in einer vakuumversiegelten Verpackung lagerbar ist.
